(19) **Europäisches Patentamt European Patent Office Office européen des brevets**

(11) **EP 4 222 422 B1**

(12) **EUROPEAN PATENT SPECIFICATION**

(45) Date of publication and mention
of the grant of the patent:
**30.07.2025 Bulletin 2025/31**

(21) Application number: **21802452.9**

(22) Date of filing: **30.09.2021**

(51) International Patent Classification (IPC):
**F24F 11/62** *(2018.01)*     **F24F 11/72** *(2018.01)*
**F24F 110/10** *(2018.01)*    **F24F 110/12** *(2018.01)*
**F24F 110/20** *(2018.01)*    **F24F 110/22** *(2018.01)*
**F24F 110/68** *(2018.01)*    **F24F 110/40** *(2018.01)*

(52) Cooperative Patent Classification (CPC):
**F24F 11/0001; F24F 11/62; F24F 11/72;**
F24F 11/46; F24F 11/64; F24F 2011/0004;
F24F 2110/10; F24F 2110/12; F24F 2110/20;
F24F 2110/22; F24F 2110/40; F24F 2110/68;
Y02B 30/70

(86) International application number:
**PCT/NO2021/050198**

(87) International publication number:
**WO 2022/071809 (07.04.2022 Gazette 2022/14)**

(54) **METHOD AND SYSTEM FOR CONTROLLING A VENTILATION SYSTEM TO PREVENT INFILTRATION OF POLLUTANTS THROUGH A BUILDING ENVELOPE**

VERFAHREN UND SYSTEM ZUR STEUERUNG EINES BELÜFTUNGSSYSTEMS ZUR VERHINDERUNG DES EINDRINGENS VON SCHADSTOFFEN DURCH EINE GEBÄUDEHÜLLE

PROCÉDÉ ET SYSTÈME DE COMMANDE D'UN SYSTÈME DE VENTILATION POUR EMPÊCHER L'INFILTRATION DE POLLUANTS À TRAVERS UNE ENVELOPPE DE BÂTIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2020 NO 20201072**

(43) Date of publication of application:
**09.08.2023 Bulletin 2023/32**

(73) Proprietor: **Airthings ASA**
**0167 Olso (NO)**

(72) Inventors:
• **LIE, Bjørnar**
**0678 Oslo (NO)**
• **HELSETH, Per Magne**
**1389 Heggedal (NO)**

(74) Representative: **LIGL IP Consult AS**
**P.O. Box 1474 Vika**
**0116 Oslo (NO)**

(56) References cited:
**WO-A1-2020/167133**    **DE-A1- 4 202 838**
**KR-A- 20190 105 391**    **US-A- 4 915 020**

**Description**

TECHNICAL FIELD

The present invention relates generally to monitoring and control of air pressure, ventilation, and air conditioning of buildings in order to prevent or reduce infiltration of pollutants through a building envelope.

BACKGROUND

Buildings are not entirely airtight. Air and other gases pass through the building envelope, and this leakage may go both ways as a function of pressure differences between the inside and the outside. This leakage can cause considerable energy loss in heated as well as in cooled buildings and may also carry pollutants into the building. In addition, gases may be released from the ground below the building and enter the building through the floor. This is particularly problematic with respect to radon, a gas produced from the natural decay of uranium and radium, found in rocks and soil. Uranium breaks down to radium, and radium eventually decays into the gas radon. Radon moves up from the soil and into buildings where it can accumulate in the air and become a health concern. Exposure to radon may lead to lung cancer.

The most common approach to this problem is to attempt to close off or seal openings through which air and other gases may flow. However, retrofitting of old buildings in order to achieve significant prevention of infiltration of pollutants or radon is expensive or impossible. Other possibilities include frequently replacing the air through active ventilation, but this requires significant amounts of energy in terms of heating or cooling as well as cleaning of the air that is pumped into the building.

An alternative approach with respect to prevention of infiltration from the ground is to install a system of pipes and fans. The pipes pass through the floor of the building and into the ground and thus provide an alternative path for gases released from the ground. Fans installed inline in the pipe system ensures that gases are sucked out through the pipes and released into the environment rather than passing into the building through the floor.

The methods described above require significant investment in modification of buildings and installation of equipment, and operation may consume energy while the results in terms of reduction in pollutants may be uncertain or variable. It is therefore desirable to find other approaches to mitigate this problem.

US patent 4,915,020 describes a method and an apparatus for combatting entrance of radon contamination into the interior living space of a dwelling. The apparatus maintains a pressure inside the dwelling sufficient to prevent radon seepage into the dwelling. Pressure control may be activated by a radon sensor configured to detect radon above a certain threshold.

International patent application with publication number WO 2020167133 A1 describes a system for monitoring and controlling air leaks through a building envelope based on air pressure differences and a measurement of the air tightness of the building envelope.

KR20190105391 uses compressed air to suppress inflow of radon. Compressed air stored in a compressed air storage unit is used to maintain indoor pressure with a predetermined level higher than atmospheric pressure.

The solutions provided by these publications do not solve all needs associated with infiltration of radon and other pollutants, for example by making control of air pressure inside a building envelope contingent on measurements of outdoor pollution levels and/or calculation of a current infiltration of pollutants.

SUMMARY OF THE DISCLOSURE

The present invention addresses these needs by controlling a buildings ventilation system in order to prevent or reduce infiltration of air or other gases carrying pollutants into the building.

According to a first aspect of the invention a method is provided for preventing infiltration of pollutants into a building, comprising obtaining an estimate of the building's airtightness expressed as a correspondence between air flow through a building envelope and a difference in air pressure on respective sides of the building envelope, obtaining a measurement of a current difference in air pressure on respective sides of the building envelope , obtaining a measurement of a current concentration of pollutants in the air outside the building envelope, and calculating an estimated current infiltration of pollutants per unit time through the building envelope from the building's airtightness, the current difference in air pressure on respective sides of the building envelope, and the measurement of a current concentration of pollutants in the air outside the building envelope. If the calculated infiltration of pollutants per unit time through the building envelope is above a predetermined threshold for infiltration of pollutants per unit time and if the air pressure on the inside of the building envelope is not at least a predetermined threshold for air pressure difference higher than the air pressure on the outside of the building envelope, controlling the building's ventilation system to increase the inside air pressure until the air pressure inside the building envelope becomes higher than the air pressure outside the building envelope with at least the predetermined threshold for air pressure difference, thus preventing or reducing infiltration of polluted air or other unwanted gases through the building envelope.

The size of the predetermined threshold may be selected dependent on features of the building and environmental factors at the location. As such, the size of the threshold may depend on how tall or large the building is and whether there are variation in air pressure difference in different parts of the building, where in the building it is most effective to maintain the desired threshold, how rapidly outside air pressure changes, and more. While the air pressure difference in principle could be zero, it may be selected to be for example 0.1 Pa, 1 Pa or even as much as 5 Pa. The selection may be subject to tradeoffs such as energy loss from air leakage through the building envelope.

In some embodiments of the invention the air pressure difference is measured close to the ground and the ventilation system is controlled to adjust the air pressure difference at the ground level of the building in order to prevent infiltration of gas containing radon through the floor of the building.

In some embodiments the ventilation system is controlled to increase the air pressure inside the building envelope by at least one of increasing the speed of an intake fan, decreasing the speed of a relief fan, increasing the opening of an intake vent, or decreasing the opening of a relief vent.

According to some embodiments of the invention the adjustment of the air pressure in the building is made contingent on different variables. For example, some embodiments include obtaining a measurement of a concentration of radon in the air inside the building envelope and controlling the ventilation system to increase the air pressure inside the building envelope only if the measured concentration of radon is above a predetermined threshold for radon concentration.

Some embodiments may make the adjustment of air pressure contingent on any resulting energy loss. These embodiments may include obtaining sensor data relating to one or more of: air temperature on respective sides of the building envelope, absolute air pressure on at least one side of the building envelope, and air humidity on at least one side of the building envelope. Based on this information the method calculates an estimated change in flow of air per unit time through the building envelope that will result from increasing the inside air pressure such that the air pressure inside the building envelope is higher than the air pressure outside the building envelope with at least the predetermined threshold for air pressure difference, and calculates an estimated energy loss that will result from increasing the air pressure difference based on the calculated change in flow of air per unit time through the building envelope and the received sensor data relating to one or more of: air temperature on respective sides of the building envelope, absolute air pressure on at least one side of the building envelope, and air humidity on at least one side of the building envelope. The ventilation system may then be controlled to increase the air pressure inside the building envelope only if the energy loss that will result from increasing the air pressure difference is below a predetermined threshold for energy loss.

Some embodiments may make the controlling of the air pressure inside the building envelope in order to prevent infiltration of air pollutants contingent on whether increasing the air pressure, and thus possibly increasing the leakage of air through the envelope, may cause humid inside air to be cooled to below its dew point while being transported through the envelope and thus cause condensation for example inside the building's walls. The method may thus include obtaining a measurement of or calculating a dew point for the air inside the building envelope, and controlling the ventilation system to increase the air pressure inside the building envelope only if the temperature of the air on the outside of the building envelope is higher than the dew point of the air on the inside of the building envelope.

According to a second aspect of the invention a system for preventing infiltration of pollutants into a building is provided. Such a system may comprise a computerized control system with communication interfaces enabling the control system to receive sensor data or data derived from sensor data and transmit control signals to the building's ventilation system, a controller with a memory holding instructions enabling the controller to issue control signals to at least one of a fan and a vent in the ventilation system, a differential pressure sensor configured to measure a difference in air pressure on respective sides of the envelope and transmit resulting sensor data to said control system, an air quality sensor or a communication interface configured to receive sensor data from an air quality sensor, the air quality sensor being configured to measure a current concentration of pollutants in the air outside the building envelope, and in said memory, a model representing the building's airtightness expressed as an estimate of a correspondence between air flow through the building envelope (11) and the difference in air pressure on respective sides of the envelope. This may enable the controller to calculate an estimated current infiltration of pollutants per unit time through the building envelope based on the building's airtightness, a current difference in air pressure on respective sides of the building envelope, and a measurement of a current concentration of pollutants in the air outside the building envelope, determine whether the air pressure on the inside of the building envelope is at least a predetermined threshold for air pressure difference higher than the air pressure on the outside the building envelope, and if it is, and if the calculated infiltration of pollutants per unit time through the building envelope is above a predetermined threshold for infiltration of pollutants per unit time, to issue control signals to the at least one of a fan and a vent in the building's ventilation system to cause an increase in the inside air pressure until the air pressure inside the building envelope becomes higher than the air pressure outside the building envelope by at least the predetermined threshold for air pressure difference, thus preventing or reducing infiltration of polluted air or other gases through the building envelope.

The system may further be configured to measure the air pressure difference close to the ground and the controller may be configured to control the at least one of a fan and a vent in the ventilation system in order to prevent infiltration of gas containing radon through the floor of the building.

Some embodiments of the system may be configured to issue control signals to control at least one of a fan and a vent in the ventilation system to increase the air pressure inside the building envelope by at least one of increasing the speed of an intake fan, decreasing the speed of a relief fan, increasing the opening of an intake vent, or decreasing the opening of a relief vent.

Some embodiments of the system further comprise a radon sensor or a communication interface configured to receive sensor data from a radon sensor. The radon sensor may be configured to measure a concentration of radon in the air inside the building envelope the memory in the controller may comprise instructions that will cause the controller to determine whether the concentration of radon is above a predetermined threshold for radon concentration and issue control signals to the at least one of a fan and a vent in the building's ventilation system to cause an increase in the inside air pressure only if it is determined that the concentration of radon is above the predetermined threshold for radon concentration.

Some embodiments of the system may further comprise sensors or communication links to sensors selected from the group consisting of thermometers, hygrometers, and barometers. The memory may further comprise instructions that will cause the controller to calculate an estimated change in flow of air per unit time through the building envelope that will result from increasing the inside air pressure such that the air pressure inside the building envelope is higher than the air pressure outside the building envelope with at least the predetermined threshold for air pressure difference, and calculate an estimated energy loss caused by the estimated change in flow of air per unit time through the building envelope combined with received sensor data relating to one or more of: air temperature on respective sides of the building envelope, absolute air pressure on at least one side of the building envelope, and air humidity on at least one side of the building envelope. Control signals may be made contingent on the calculated energy loss such that the controller only issues control signals to the at least one of a fan and a vent in the building's ventilation system to cause an increase in the air pressure inside the building envelope if the calculated energy loss that will result from increasing the air pressure difference is below a predetermined threshold for energy loss.

Finally, some embodiments of the system may comprise one or more sensors providing data related to temperature and humidity on respective sides of the building envelope. The memory may then comprise instructions that will cause the controller to obtain a measurement of or calculate a dew point for the air inside the building envelope, determine whether the temperature of the air on the outside of the building envelope is higher than the dew point for the air inside the building envelope, and issue control signals to the at least one of a fan and a vent in the building's ventilation system to cause an increase in the air pressure inside the building envelope only if it is determined that the temperature of the air on the outside of the building envelope is higher than the dew point for the air inside the building envelope.

BRIEF DESCRIPTION OF THE DRAWINGS

The attached drawings show exemplary embodiments of the invention intended to further explain the various aspects and embodiments in conjunction with the detailed description. In the drawings

FIG. 1 is an illustration of stack effect in multilevel buildings;

FIG. 2 is an illustration of a setup with several means for preventing or reducing infiltration of pollutants into a building;

FIG. 3 is a similar setup enhanced with additional sensors and with a computer system that may be configured to control a ventilation system to prevent or reduce infiltration of pollutants into the building;

FIG. 4 is an illustration of sensor placement in buildings with several levels or several rooms;

FIG. 5 is a flow chart illustrating a method for preventing or reducing infiltration of pollutants by increasing air pressure inside a building; and

FIG. 6 is a block diagram illustrating a system for controlling a ventilation system in order to prevent or reduce infiltration of pollutants into a building.

DETAILED DESCRIPTION

In this detailed description, exemplary embodiments of various aspects will be described. The description substantially relies on the terminology used in standards and other literature relating to building permeability and air leakage. In particular a building may be any construction with a substantially well-defined boundary or barrier separating the inside from the outside. The building is intended to include other types of man-made constructions that buildings in a strict sense, including, for example, tunnels, ships, and the like, as well as parts of such constructions.

A building envelope, or envelope, is the boundary or barrier separating the inside of the building or part of the building from the outside environment or another building or another part of the building. The terms inside and outside refer to the inside of the envelope and the outside of the envelope, i.e. the opposing sides of the envelope. The terms indoor and outdoor refer to the space or area inside and outside the envelope, respectively, and may be used synonymous with inside and outside.

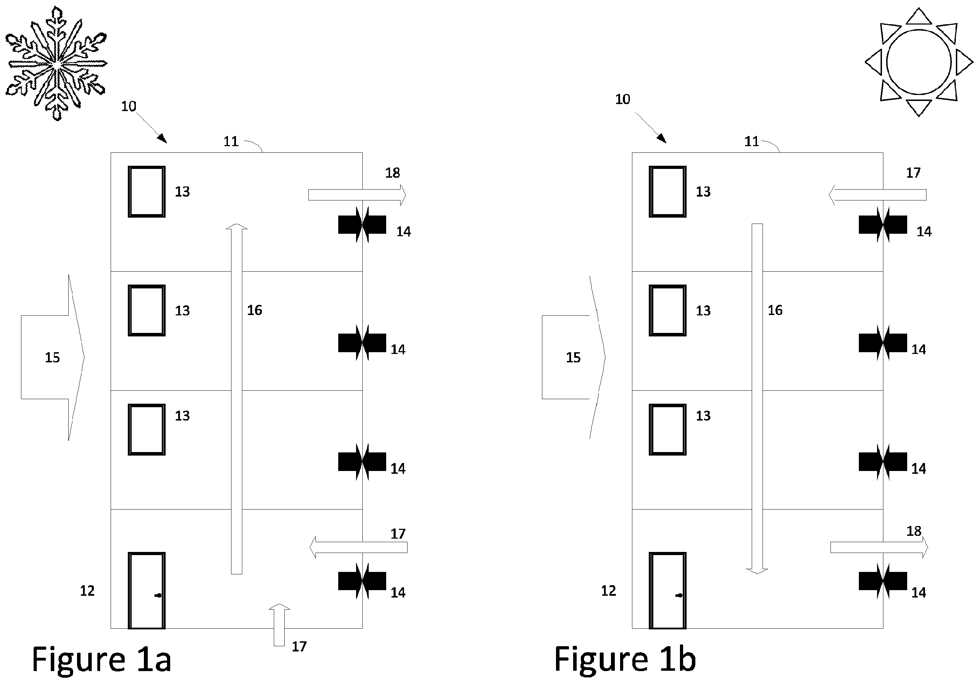

FIG. 1 shows a four-story building 10 with a building envelope 11. The envelope includes a front door 12 and windows 13. In addition, the envelope 11 will invariably include additional intended and unintended openings such as ventilation openings, cracks etc. The air inside the building envelope 11 is subject to a number of forces, including indoor and outdoor pressure differences 14, wind 15, and differences in indoor and outdoor air density caused by differences in barometric pressure, temperature and humidity. When indoor air is less dense than outdoor air, indoor air will rise 16 and air will infiltrate 17 into the lower floors and exfiltrate 18 from the higher floors. This situation, which is often referred to as the "stack effect" is typical during the cooler season when air inside the building 10 is warmer than air outside the building. Infiltration 17 may also include infiltration from the ground through the floor of the building 10.

When the air inside the building envelope 11 is less dense than the outdoor air, a situation that is typical when the inside air is cooled, a reverse stack effect result. The inside air sinks 16, the pressure difference between inside and outside air increases and air exfiltrates 18 from the lower floors and infiltrates 17 through the upper floors.

Somewhere between the upper and the lower floors there will be a neutral pressure level where outside and inside air is equal. The elevation of the neutral pressure level can be manipulated through changes to the indoor climate.

Wind 15 will typically push air in through the windward side of the building 10 and pull air out from the leeward side. This creates horizontal differences in air pressure in addition to the vertical differences mentioned above.

Passive ventilation systems utilize the stack effect described above by providing ventilation openings through the building envelope 11 in appropriate positions and with the appropriate area.

In addition to the forces mentioned above, which are caused by wind and weather, the air pressure inside the building envelope 11 is affected by a building's active ventilation system. Active ventilation systems may include intake fans and relief fans (or exhaust fans), as well as heat exchangers configured to transfer heat from the exhausted inside air to the incoming outside air in order to reduce energy loss.

The intake and relief fans will have an impact on the difference in pressure between the inside and the outside of the building envelope 11. Excess intake of air will create a positive pressure difference between the indoor and the outside environment, pushing indoor air out through openings in the building envelope 11. Conversely, excess relief will cause a corresponding negative pressure difference and pull outside air in through the openings, creating draught and introducing unfiltered polluted air into the building.

It will be readily realized by those with skill in the art that excess airflow through the building envelope 11 may cause pollutants to be introduced into the building. While air that is introduced through active ventilation may be cleaned in order to fulfill requirements, air that infiltrates 17 through the building envelope 11 may not. This may necessitate more rapid replacement of the indoor air in order to remove polluted air and replace it with cleaned air. Since outdoor air typically needs to be heated or cooled, this excessive replacement of air typically causes excessive use of energy. This is the case whether the infiltration is in the form of air from the environment or gases such as radon from the ground.

Preventing infiltration of pollutants by limiting airflow through the building envelope can be obtained in two ways: by closing openings in the building envelope or by controlling the fans that provide air intake and relief. The two methods may, of course, be combined. Preventing infiltration of gases from the ground can similarly be controlled by creating a barrier between the ground and the building floor, or by reducing pressure below the building by installing a radon fan. It should be noted that the phrase preventing as used in this disclosure and in the claims should be interpreted as preventing or reducing. In other words, prevent does not mean that any and all possible infiltration of pollutants are prevented from filtering into the building, but that at least a significant portion of such pollutants are prevented from filtering into the building.

While controlling indoor-outdoor pressure difference does not, strictly speaking, require knowledge of the airtightness of the building envelope 11, such knowledge is advantageous and allows for more precise monitoring and control of parameters. Several methods for measuring airtightness have been proposed, such as the international standard ISO 9972. This standard describes a fan-pressurization method that can be used for measuring air permeability of a building, to compare relative air permeability of several similar buildings, and to determine air-leakage reduction resulting from retrofit measures.

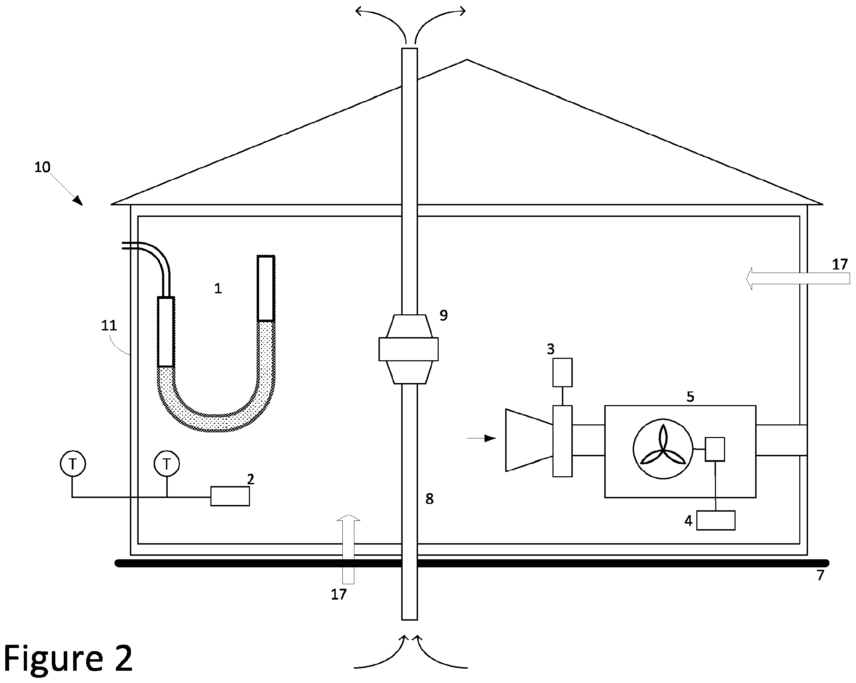

ISO 9972 describes several ways of creating a negative or positive pressure in a building envelope in order to determine air permeability. FIG. 2 illustrates a typical setup.

FIG. 2 shows a building 10 with a differential pressure-measuring device 1 configured to measure the relative difference between indoor and outdoor air pressure. According to ISO 9972 the pressure-measuring device should have an accuracy of $\pm 1$ Pa in the range of 0 Pa to 100 Pa. A temperature-measuring device 2 measures indoor and outdoor temperature. An airflow measuring system including an air flow meter 3 measures airflow through a duct and fan assembly 5 including a fan control 4 configured to control the speed of the fan. The size of the air duct and the capacity of the fan are matched so that the linear flow velocity within the air duct falls within the range of measurement of the air flow meter 3. The equipment used for the measurement can be specifically designed for the purpose, or the building's permanent heating, ventilation or air conditioning system fans may be used. Also provided is a radon barrier 7 and a radon mitigation system, also referred to as an active soil depressurization system (ADS) comprising a pipe 8 and a fan 9. The fan draws soil gas containing radon from beneath the building 10 and expels it outdoors.

When the indoor pressure is lower than the outdoor pressure (the building is depressurized), as indicated by the differential pressure-measuring device 1, air will infiltrate 17 through the building envelope 11. Conversely, if the indoor pressure is higher (the building is pressurized), air will exfiltrate through the building envelope 11. ISO 9972 requires that measurements are made at a range of applied pressure differences in increments of no more than approximately 10 Pa. The highest pressure-difference shall be at least 50 Pa, but 100 Pa is recommended. For large buildings and with limited capacity air-moving equipment this may not be achieved, but tests may be valid with air pressure differences as low as 25 Pa. It is recommended that two sets of measurements are made, during pressurization and depressurization of the building.

Other methods for making similar measurements have been proposed. Some methods propose use of modulated air streams, i.e. comparatively rapid changes between two different flow rates, and airtightness is calculated based on the measured building pressure response to the modulated flow rate. It has also been suggested, particularly for smaller buildings or rooms, to use compressed air released as pulses rather than fans.

The present invention does not depend on any particular method for measuring air permeability, and may also be worked in the absence of precise measurements and instead rely on assumptions, for example based on knowledge of the building's characteristics and air permeability of buildings with a similar construction and size. However, precise measurements may improve the results obtained through the use of the invention.

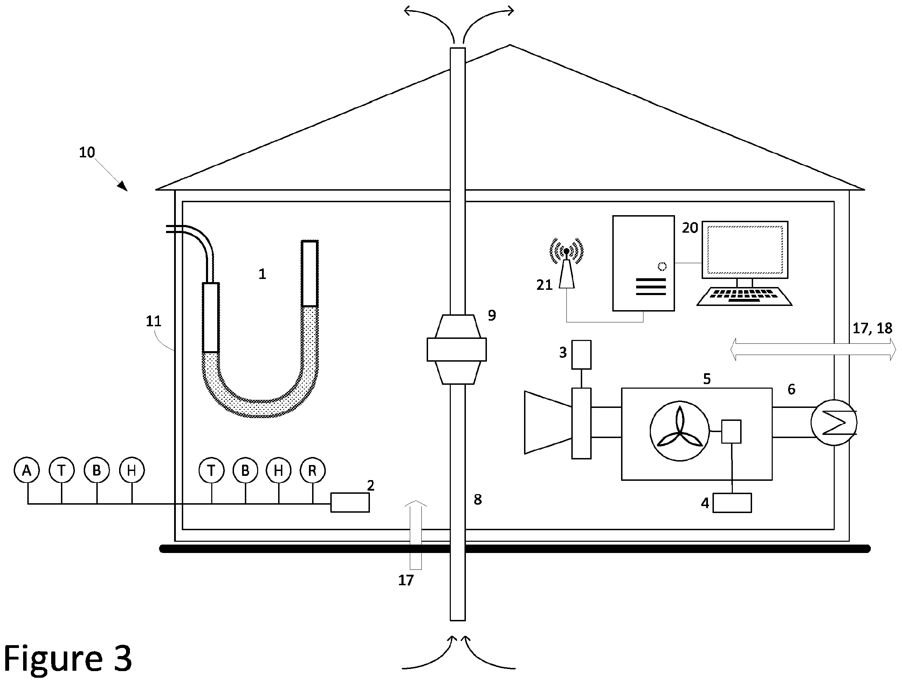

Reference is now made to FIG. 3, which shows a building with a setup much similar to the one described above with reference to FIG. 2. In addition to the components already described, the system illustrated in this drawing includes a computer system 20 and a wireless access point 21. The wireless access point 21 is configured to establish communication with the various devices included in the system. The differential pressure-measuring device 1 is configured to measure pressure difference between the indoor and the outdoor environment as described above. The temperature-measuring device 2 is shown here as a controller connected to a plurality of sensors. In the embodiment illustrated in the drawing the sensors include indoor and outdoor sensors for temperature T, air pressure B, and air humidity H, as well as an indoor radon detector R and an outdoor air quality detector A. It should be noted that most current barometric sensors have an absolute accuracy that is insufficient for measurement of pressure differences between inside and outside of the envelope 11. Consequently, some embodiments include barometric sensor(s) only on one side of the envelope, either outside or inside, and the absolute air pressure at the other side of the body envelope 11 may then be calculated based on the measurement from this sensor and the difference measured by the differential pressure-measuring device 1. However, it is consistent with the principles of the invention to use barometric sensors on both sides of the envelope 11, and even to use a differential pressure-measuring device 1 that is based on measurements of absolute pressure on both sides of the envelope, provided that such measurements are sufficiently accurate.

The differential pressure-measuring device 1 is shown here as a separate device while the remaining sensors are connected to a common controller. It will be realized by those with skill in the art that the differential pressure-measuring device 1 may be connected to the same controller as the remaining sensors, and also that any or all of these sensors may be connected to a separate controller. Different sensors may also be part of the same electronic circuitry in a common housing, and they may be designed specifically for the purpose of being part of a system according to the present invention, or they may be of a general purpose design and even configured to deliver data to more than one system.

Some embodiments may also include a heat exchanger 6, which is capable of cooling air that flows out of the building 10 and using the extracted heat to heat air that flows into the building. The process can be reversed during the warm season when the building is cooled.

The air flow meter 3 measures air flow velocity in the air duct and the fan control 4 controls the speed of the fan in the fan assembly 5. The air flow meter 3 may be required for performing the method described above in order to obtain the correspondence between pressure difference and air leakage. The air flow meter is, however, not required for control of air pressure differences in the building after this correspondence has been obtained. The sensors 1, 2, 3 and the fan control 4 may include wireless communication capabilities and be configured to establish communication with the wireless access point 21. It is, of course, consistent with the principles of the invention to include wired communication instead of or in addition to wireless communication capabilities.

Some embodiments of the invention may not include the air flow meter 3, the fan control 4 and/or the fan assembly 5. Embodiments that are not configured to be integrated with and control the ventilation system in the building, primarily provide monitoring of energy leakage from a building 10.

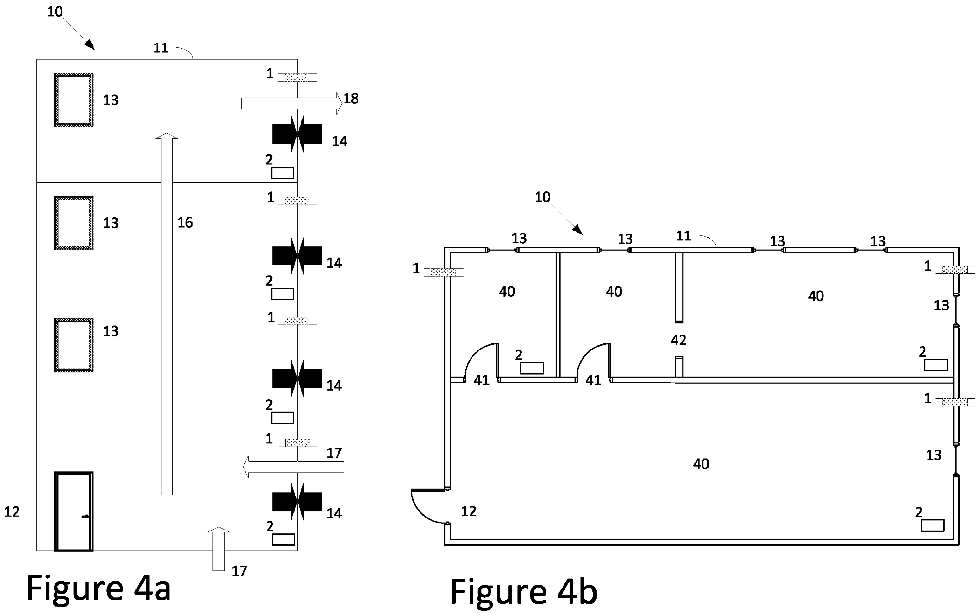

As already described with reference to FIG. 1, the stack effect can cause differences in air pressure 14 at different elevations of a building as a result of the stack effect. This is illustrated in FIG. 4a, where air inside the building rises 16 causing infiltration 17 at ground level and exfiltration 18 at the top level. Differences may also be caused by active ventilation if air is pumped into the building 10 and out of the building 10 at different rates. In the building in shown in FIG. 4a the resulting differences are detected by differential pressure-measuring devices 1 and sensors 2 on each floor. Differences may also occur in different rooms on the same floor as a result of active and passive ventilation, different heating of the different rooms, and outdoor conditions such as wind striking the building on one side. FIG. 4b shows how such differences may be measured using differential pressure-measuring devices 1 and sensors 2 in several rooms.

In the example in FIG. 4a each floor is provided with a differential pressure-measuring device 1 and a sensor controller 2. Each sensor controller 2 may be connected to one or more indoor and/or outdoor sensors. It may not be required to provide each sensor controller 2 with a full set of sensors. In order to avoid cluttering the drawing unnecessarily the sensors T, B, H are not included in the drawing. They can be assumed to be connected to or part of the various sensor controllers 2.

Air pressure varies with height. If everything else was equal, this difference would be the same outside and inside a building. However, because of the stack effect described above, the pressure difference will vary from floor to floor, and so will be the case for the resulting infiltration 17 and exfiltration 18. If a system according to the invention is configured to prevent infiltration of pollutants from the outside air, it may be necessary to consider air pressure differences at different floors and possibly also whether pollutants are concentrated at any specific level. Which floors to prioritize for positive pressure difference may have to be based on where the outside concentration of pollutants is highest and whether there are tradeoffs to maximizing air pressure difference based on the need for preventing infiltration of pollutants with other needs such as preventing air leakage out of the building.

In the floorplan in FIG. 4b the floor includes a number of rooms 40 that are connected by interior doors 41 and doorways 42. Other openings may also be present, such as air vents, passageways, etc. The more complex the subdivisions of the floor and the ways air may flow between them, the more complicated the measurements and calculations become. In the illustrated example sensor controllers 2 are present in two rooms while one room is without any sensors. This means that it becomes necessary to estimate the conditions in the room without sensors. This situation is not prohibitive to the solution obtained by the present invention, but whenever estimates must be substituted for accurate measurements, the accuracy of the obtained results may be reduced. As a first approximation, the air pressure may be assumed to be equal throughout the entire floor simply because air will flow from rooms with higher pressure to rooms with lower pressure until balance is established. To the extent that multiple air pressure sensors are present and give different results for different rooms, the air pressure in rooms without sensors may be approximated based how they are connected to other rooms and the measured pressure in these other rooms.

It is not only the air pressure that may vary throughout a building. The temperature may also be different in different rooms. For example, the temperature in a hotel room may be heated (or cooled) less if the room is not occupied, in order to save energy. If this is the case, calculated energy loss may be based on the average temperature throughout the building, or by calculations for respective floors and/or rooms based on the proportional part of the envelope that floor or room can be associated with, and the measured temperature and measured or estimated air pressure difference.

Finally, also the humidity may vary throughout a building. The humidity may, for example, depend on the extent to which air is transported through the envelope (e.g. through a main entrance of the building), as well as the use of the different parts of the building. The humidity may, for example, be significantly higher in a kitchen, a bathroom, or a swimming hall, or even in assembly halls during events, than in other parts of the building. Again, the extent to which this can be taken into consideration during calculations and control of a ventilation system in accordance with the invention depends on the availability of sensors and the accuracy of estimates that can be made in the absence of sensors.

The difference in air pressure 14 will contribute to infiltration of unfiltered air through openings in the building envelope 11 in any floor or room where the air pressure is lower on the inside than on the outside. If this is the case at the lowest level of the building the difference will also contribute to infiltration of soil gas from the ground. This situation is not desirable, and in accordance with the invention the situation can be mitigated by appropriately controlling the ventilation system of the building 10.

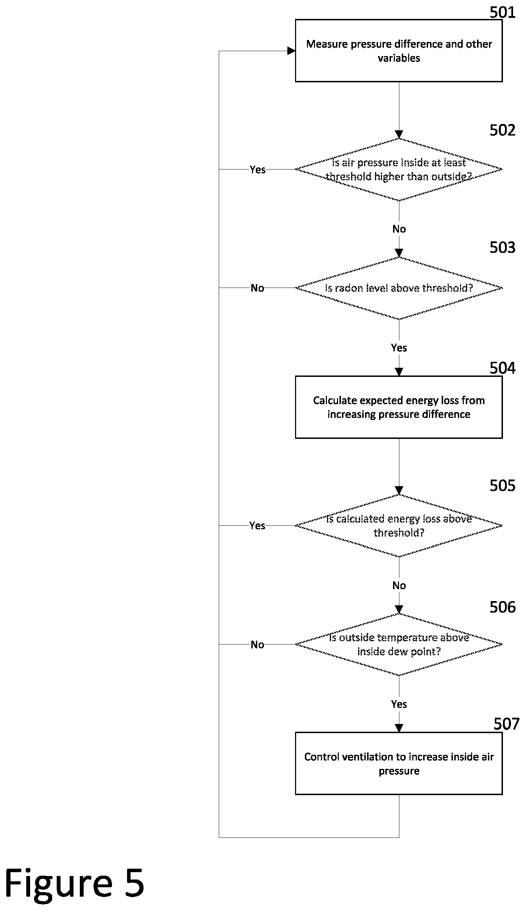

Reference is made to FIG. 5, which is a flow chart illustrating an embodiment of a method for controlling the air pressure difference between the inside and the outside of a building envelope 11 in order to prevent infiltration of pollutants. It should be noted that the method illustrated may give the impression that discrete steps are performed in a particular sequence. This does not have to be the case. Instead, various sensors 1, 2 may provide input to logical circuitry or corresponding software modules, and output from these circuits or modules may be used as input to a controller that determines how to control the ventilation system. It should also be noted that this method describes various parameters that may override a decision to control the air pressure in order to prevent infiltration of pollutants. Embodiments do not have to include all these parameters and may also include additional parameters or establish more complex dependencies between them. The method will therefore be described as a process including subprocesses and the subprocess, many of which are not mandatory in all embodiments, may be performed continuously, in dependence upon the result of other subprocesses, or in any sequence.

In a subprocess 501 the pressure difference between the inside and the outside of the building envelope 11 is measured along with other variables. This subprocess will typically be one of pulling data from sensors 1, 2, 3, receiving data pushed from sensors 1, 2, 3, or some combination thereof. The data may include pressure difference between the inside and the outside of the building envelope 11, absolute pressure for one or both sides, temperature for one or both sides, and air humidity for one or both sides. The data may also include a measurement of radon or other pollutants in the air inside the envelope 11, a measurement of pollutants in the air outside the envelope, as well as other parameters.

In a subprocess 502 it is determined whether the air pressure inside the building envelope 11 is higher than the air pressure outside the building envelope 11 with at least a predetermined threshold value. In principle this threshold value may be zero since a pressure difference of zero will not contribute to infiltration of air. However, in order to prevent the pressure difference to become negative when the system adapts to rising outdoor air pressure, the threshold value should be higher. How high may depend on characteristics of the building and the ventilation system, for example the size of the building 10, the air tightness of the building envelope 11, and the capacity of the ventilation system, as well as how much the air pressure varies, how fast it changes, how exposed the building 10 is to wind, and more. It may therefore be desirable to set the threshold as low as 0.1 Pa, but 1 Pa may be necessary in order to obtain positive pressure difference during changing conditions and throughout the building 10. In some cases, an even higher threshold may be chosen, for example 5 Pa.

If this subprocess 502 determines that the air pressure difference is already above the threshold, it may be unnecessary to do any adjustments, and the process may return to subprocess 501. However, some embodiments of the invention may take other parameters into consideration. It may, for example, be desirable to reduce the air pressure difference for other reasons, for example to reduce energy loss or transport of humidity through the building envelope 11.

If the air pressure is found in subprocess 502 to be below the predetermined threshold, subprocess 507 may be activated to control the ventilation system to increase the pressure difference. However, additional conditions may be implemented and prevent this from happening.

One example of an additional condition is subprocess 503. This subprocess may determine whether a measured radon level, or a level of some other pollutant in the air inside the building 10 is above a predetermined threshold. If it is not it may be considered unnecessary to increase the air pressure inside the building envelope.

This subprocess 503 may also be based on measurements outside the building 10. For example, if the air quality as determined by the presence of particles, gases, air quality index (AIQ) or some other parameter, is deemed to be acceptable it may be determined in this subprocess that it is unnecessary to adjust the air pressure difference and the process may return to subprocess 501.

Another subprocess that may be implemented is a consideration of increased energy loss that may be caused if the air pressure difference is increased to the predetermined threshold. A method for calculating the energy loss caused by air leak from pressure difference is described below. This subprocess first calculates 504 the expected energy loss, and then determines 505 if the expected energy loss is above a predetermined threshold for acceptable energy loss. If the expected energy loss is too high the process may return to subprocess 501.

In subprocess 506 the dew point of the air inside the building may be compared with the temperature outside the building. Increasing the air pressure inside the building envelope 11 to a predetermined threshold increased transportation of humidity through the walls of the building. The latter may be undesirable particularly if the air inside the building 10 is warm and humid and the air outside the building 10 has a temperature that is colder than the dew point of the air inside the building. In this case the air transported through the building envelope may cool to below its dew point before it leaves the building which may cause condensation inside the walls.

Subprocess 507, which has already been described above, may be initiated when it is determined by subprocess 502 that the air pressure inside the building envelope 11 is not at least a predetermined threshold higher than the air pressure outside the building envelope, provided that no other subprocess determines that this should be overridden. Consequently, if subprocess 507 is initiated the ventilation system may be controlled to increase the air pressure inside the building envelope 11 until the desired threshold difference is obtained. The ventilation system can be controlled by increasing the speed of intake fans, decreasing the speed of relief fans, or by changing vents to allow more air to flow into the building 10 or less air to flow out.

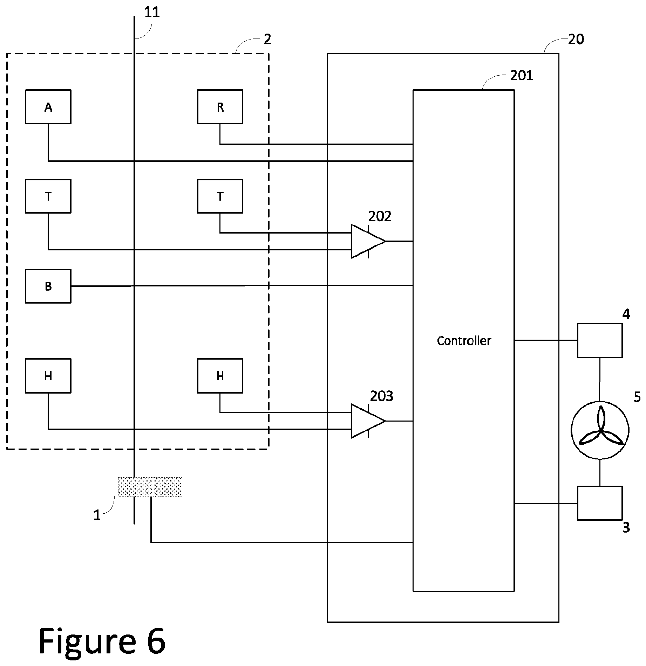

FIG. 6 shows a simplified block diagram of an embodiment of the invention. In this embodiment a differential pressure-measuring device 1 measures the difference in air pressure on the two sides of a building envelope 11 and provides the results to the computer system 20 which includes a controller module 201. The sensor controller 2 controls and receives data from an outside and an inside hygrometer H, an outside barometer or air pressure sensor B, an outside and an inside thermometer T, an outside air quality sensor A, and an inside radon sensor R. The measured temperatures may be provided to an air pressure comparator 202 and the measured humidity to a humidity comparator 203 in order to provide temperature differences and humidity differences to the controller 201. The controller 201 and the comparators 202, 203 may be implemented in hardware or in hardware/software combinations, for example as software modules running on a computer 20 equipped with the necessary hardware to receive sensor data from the sensors.

The controller may determine how to control the ventilation system based on the process described above or another embodiment of a control process in accordance with the invention. The controller 201 may send control signals to the air fan control 4 and/or to actuators controlling vents. The air fan control in turn controls one or more fans 5 in the ventilation system. In some embodiments the resulting air flow may be measured by an air flow meter 3 and the results may be provided to the controller 201 so the controller can determine if it is necessary to increase or reduce the fan speed.

Additional processes in the controller 201 or in other modules in the computer 20 may be implemented in order to perform other calculations on sensor data or operations to control the ventilation system. The output from these processes may be used to modify the instructions given by the controller 201 to the fan control 4 or other actuators. For example, the fan speed may be adjusted based on information relating to the air tightness of the building and the measured air flow. As already mentioned, estimated energy loss or humidity transportation through the building envelope 11 may also be considered. The following is a brief presentation of how such calculations may be performed.

A method of monitoring or estimating energy leakage may commence with the provision of an estimate of the air leakage coefficient, $C_L$, for the building 10 and an air flow exponent $n$. $C_L$ and $n$ represent a correspondence between air flow through a building envelope and the difference in air pressure on respective sides of the envelope, and may be established through testing, for example by following ISO 9972. However, it is also possible to use an estimate of this coefficient based on knowledge of the building's structural construction, materials used, requirements at the time it was built, etc. The closer to the actual value the estimate is, the better the results of the monitoring will be, and an estimate based on testing will be better than an estimate based on known characteristics of the building.

The air leakage rate may be expressed as a function of pressure difference, such that a measurement of the pressure difference, $\Delta p_r$, from the differential pressure-measuring device 1, may be used to calculate the air flow, $q_{pr}$, through the building envelope.

$$q_{pr} = C_L (\Delta p_r)^n \qquad (1)$$

For appropriate values of $C_L$ this gives the air leakage rate in cubic meters per hour. Air leakage rate per second can be found by dividing by 3600.

Since water has a higher heat capacity than air, humid air will have a higher heat capacity than dry air. Consequently, the energy transported through the envelope as a result of air leakage depends on the temperature difference between inside and outside air as well as the humidity of the outside air. The actual energy transportation through the envelope will, of course, depend on the energy content of the leaked air itself. But since air leakage into the building is outside air, while air leakage out of the building is air that will have to be replaced by outside air that must be either heated or cooled, it is the energy content of a corresponding amount of outside air that is relevant.

The heat capacity of the outside air as a function of humidity can be approximated by

$$C_{p,humid} = 1.01 + 1.82 \cdot x \qquad (2)$$

where x is the humidity ratio, given by

$$x = \frac{m_w}{m_d} = 0.62198 \frac{p_w}{p - p_w} \qquad (3)$$

and where $m_w$ is the mass of water, $m_d$ is the mass of dry air, $p_w$ is the partial pressure of water vapor, and $p - p_w$ represents the partial pressure of dry air, $p_d$, given by $p_d = p - p_w$.

Furthermore,

$$p_w = \phi \cdot p_{sat} \qquad (4)$$

where $\Phi$ is relative humidity and $p_{sat}$ is the saturation vapor pressure of moist air, given by Tetens equation.

$$p_{sat} = f \cdot p_T$$

$$f = 1.0016 + 3.15 \cdot 10^{-6} p - 0.074 p^{-1} \qquad (5)$$

$$p_T = 6.112 \cdot exp \frac{17.62 T_c}{243.12 + T_c}$$

where $T_c$ is the temperature in degrees Celsius and $p$ is air pressure. It should be noted that Tetens' equation is an approximation and that other versions of this equation have been suggested and may be used in embodiments of the invention.

Heat capacity links energy and mass, while air leakage rate gives the volume, not the mass, of leaked air. Consequently, it is necessary to consider the density of the air. Since water molecules are lighter than air, the density is reduced when humidity increases. This relationship can be expressed as

$$\rho_{humid} = \frac{p_d M_d + p_w M_w}{R \cdot T} \qquad (6)$$

where $T$ is the temperature in Kelvin, $p_d$ is partial pressure of dry air as defined above, $M_d$ is the molar mass of dry air, $M_w$ is the molar mass of water vapor, $p_w$ is the partial pressure of water vapor, and R is the specific gas constant for dry air.

In equations (2) through (6) the parameters used are those for outside air. Whether the air leakage is into or out of the building and whether the outside air is warmer or cooler than the air inside the building, it is the outside air that is transported into the building - either through leakage or through the ventilation system - that needs to be heated or cooled to the temperature of the inside air. Consequently it is the heat capacity of the outside air that is relevant for calculating energy loss due to leakage.

We may now define an energy factor $K_E$ as

$$K_E = C_{p,humid} \cdot \rho_{humid} \cdot \frac{1}{3.6 \cdot \eta} \qquad (7)$$

where heat capacity and density are taken from equations (2) and (6), respectively, 1/3.6 is a conversion from kJ to Wh, and $\eta$ is the efficiency of the heating or cooling process. The latter ensures that the calculated loss of energy is given in terms of how much energy will be required to make up for the loss resulting from the air leakage, and not simply the energy content of the leaked air. The power in Watts required to compensate for this can be found as

$$E = q_{pr} \cdot \Delta T \cdot K_E. \qquad (8)$$

It will be seen from the equations above that the energy loss may be found based on measurements of inside and outside pressure, outside relative humidity, and outside and inside temperature. All other parameters are either derived from these or they are known constants, except for the air leakage rate $q_{pr}$, which is established as described above. These measurements and calculations provide an estimate of the amount of power required to compensate for energy loss caused by air leaking through the building envelope.

The temperature difference between inside and outside may be provided by the sensor controller 2 based on input from temperature sensors T connected to the sensor controller 2. Similarly, the pressure difference may be provided by the sensor controller 2 based on input from the differential pressure-measuring device 1. Absolute barometric pressure may be provided by respective outside and inside air pressure sensors B. Alternatively, only one air pressure sensor B is provided either inside or outside, and the absolute air pressure on the other side is calculated from the measured absolute pressure and the pressure difference measured by the differential pressure-measuring device 1. Humidity on the outside and the inside of the envelope is measured by humidity sensors H. The computer system 20 may receive sensor data from the sensor controller 2 and the differential pressure-measuring device 1 over the wireless access point 21 and calculate air leakage rate per hour using the equations described above.

The system may further be configured to calculate how much water the air outside and inside the building contains. Based on this, the system may further be configured to calculate how much water the air leaking through the envelope contains, and how much of this water the air will lose to condensation if air leaks from the warmer side to the cooler side. If cool air or sufficiently dry warm air leaks through the walls, the leaking air will not cause any condensation. If, however, warm, humid air leaks into cool air, condensation may result, depending on the dew point of the warm, humid air and the temperature of the cool air. Condensation typically occurs if hot humid air is sucked into a cooled building during summer, or if heated humid air leaks out to dry, cold outside air in the winter.

Exactly how much water will be deposited through condensation depends on several factors. It will be realized that if the hot humid air is only chilled to a temperature which is above its dew point, no condensation will take place. And, of course, if cold air leaks through to the warmer side, no condensation takes place as a result of the cold air being heated by the surrounding air. Some condensation may, however, take place locally if, for example, cold air reduces the temperature of a surface at the location where it is leaking through.

However, by calculating the absolute humidity of the outside and the inside air and calculating the air leakage rate using equation (1) it is possible to determine an upper threshold of water condensation. Absolute humidity in kg per m³ can be calculated as

$$AH = \frac{m}{V} = \frac{p_w}{R_w T} = \frac{p_{sat} \cdot \phi}{R_w T} \qquad (9)$$

where $p_w$ and $p_{sat}$ are the partial pressure of vapor and saturated vapor pressure as already described above, $R_w$ is the specific gas constant of water vapor, approximately 461.5 J/kg·K and $\Phi$ is the relative humidity. As above, $p_{sat}$ can be found by Tetens equation (5), and pressure, relative humidity and temperature are measured. Equation (7) can be used to calculate absolute humidity for outside and inside air. Multiplying the difference in absolute humidity between outside and inside air with the air leakage rate provides an upper threshold for condensation if the difference is positive (i.e. if hot humid air leaks to dry cold air).

$$Condensation\ rate\ limit = q_{pr} \cdot |AH_{out} - AH_{in}|. \qquad (10)$$

The condensation rate limit represents an upper limit of the amount of water that may be deposited as condensation when the hot humid air is cooled to the same temperature as the cold dry air on the other side of the envelope.

It will be understood by those with skill in the art that water may be deposited as condensation if air is moving from a hot and humid side of the envelope to a cooler side of the envelope. As already mentioned, if the temperature of the cooler air is higher than the dew point of the hot and humid air, the excess humidity will simply be absorbed by the dry, cool air. If the temperature of the cool air is lower than the dew point of the warmer, humid air, the leaked air will lose the excess humidity as condensation as it is cooled to the temperature of the dry, cold air.

It will be realized by those with skill in the art that this equation does not take additional factors into consideration, such as dew point, ventilation, heat recovery or other aspects. It is possible to make more precise calculations, for example by using Mollier diagram. Equation (10) also does not say anything about where condensation takes place. However, if the leaking air moves relatively slowly through the building envelope, its temperature will to a large extent drop while it is being transported through the wall, and there is a high risk that condensation will take place inside the wall where it may cause structural damage, mold or other problems.

In order to eliminate or reduce this risk, an aspect of the present invention includes using the results of measurements and calculations in order to control the ventilation system of the building to prevent or at least reduce air leaks through the building envelope from the warmer, humid side to the cooler, dry side.

In some embodiments, the invention simply ensures that the air pressure inside the building is equal to or slightly higher than the air pressure outside the building if the inside air is colder and dryer than the outside air, and conversely that the inside air pressure is equal to or slightly lower than the outside air pressure if the inside air is hotter and more humid than the outside air. This will ensure that the air leaking through the building envelope is colder and dryer than the air it meets on the other side of the envelope. This control of inside air pressure can be obtained by controlling the speed of intake fans and relief fans using fan control 4.

As explained with reference to FIG. 1, the stack effect can cause inside air pressure to vary such that air may pass one way through the envelope in a lower part of the building and the other way in an upper part of the building. Air pressure differences may also vary for other reasons, such as wind 15, different temperatures in different parts of the building, variations in how much air is pumped into or out of the building in different parts of the building, the degree to which air can flow freely between different parts of the building, etc.

A situation like the one just described adds an additional consideration. Since having an air pressure that is slightly lower on the hot and humid side of the envelope should be true in all parts of the building, some parts of the building may experience a difference that is higher than necessary for that part of the building. Exactly how high the difference needs to be at the location or locations where the pressure difference is measured in order to ensure that air flows consistently from the cooler to the warmer side may depend on height of the building, air leakage coefficient, effective leakage area, wind, and other variables. It may therefore be necessary to calibrate the minimum air pressure difference based on measurements or theoretical calculations of properties that are specific to the building where the invention is being installed.

The air pressure difference between inside and outside the envelope, does not have to be substantial in order to ensure that air leaks in the desired direction. A bare minimum of difference in potential of pressure between two sides of a structure will cause a net transfer of air from the side with the highest pressure until the pressure on the two sides are balanced. One factor influencing how much potential difference is needed, is resistance in the airflow cavity path. The composition and complexity of the wall assembly, and where the pathways of the moving air is located and shaped will cause resistance, and hence increase the potential difference needed to ensure that air is moving in one direction through the wall. Furthermore, wind and stack effect will cause differences and fluctuations in the pressure on different sides of the building and on different floors of the building. It is therefore necessary to ensure that the required pressure difference is obtained everywhere, not only at the location of the pressure measuring device(s) 1. Consequently, while a pressure difference of only 0.1 Pa may be sufficient, it may be necessary to increase this difference to e.g. 1 Pa or more to ensure that the required minimum pressure difference is obtained throughout the building. The invention is not limited to any specific pressure difference. Instead the required pressure difference may be adjustable such that configuration of a specific installation can be based on the location of differential pressure measuring devices 1, the number of floors, how air moves between floors and rooms inside the building (dependent on fans, ventilation shafts, doors and open corridors), wind, as well as other factors that may be relevant on a case by case basis.

Generally speaking, the characteristics of buildings may vary substantially, particularly if the building includes several floors and regions on the same floor with limited air flow between them and with differences in air temperature and humidity. For more complicated buildings the air pressure threshold should be obtained in all parts of the building, which may require a higher threshold for the places where differential pressure-measuring devices 1 are located. No general rule can be specified for this. Rather, it will be a design requirement to be established on a case by case basis.

It will be realized by those with skill in the art that if the dew point on the hot and humid side is lower than the temperature on the cold side the direction of air leak may not matter, at least not for the purpose of avoiding condensation, and preventing energy loss may remain the highest priority. However, other considerations may also be taken into account. For example, if the atmosphere inside the envelope is controlled in terms of pollution, dust or other elements that may be present in the outside air but removed by the ventilation system before air is introduced into the building, it may be desirable to ensure a higher air pressure inside the envelope than outside.

As described above, a system according to the present invention may in various embodiments be used to measure current conditions in and around a building and calculate energy loss through the envelope due to air leakage and condensation rate for air transported through the envelope and take this into consideration when determining whether to increase the inside pressure in order to prevent infiltration of pollutants.

This can be done by taking the following criteria into consideration:

- It is desirable to obtain an air pressure inside the envelope that is equal to the air pressure outside the envelope in order to avoid air leaks through the building envelope - i.e. as much as possible of the air transported into or out of the building should be transported through the ventilation system.

- It is desirable to avoid that warm, humid air is cooled down such that it meets its dew point inside the structural elements that constitute the envelope (walls etc.) or on other surfaces inside the envelope in order to avoid condensation that may cause damages.

- It is not desirable to use more resources in terms of power and load on the ventilation system than the gains that are actually obtained.

Returning now to FIG. 3, in embodiments of the invention where the system is configured not only to monitor selected variables, but also to control the ventilation or HVAC system based on the results of the monitoring, the computer system 20 may be configured to control the fan control 4. Possibly also the heat exchanger 6 as well as other controllable parts of the ventilation system such as ventilation openings, and air dryers or humidifiers. In larger buildings, any number of fans, heat exchangers and other HVAC components may be controlled, but in order to simplify the explanation this example includes one fan and one heat exchanger. There is no loss of generality by making this assumption, but the considerations outlined above become relevant when the system is more complex.

The fan control 4 controls the speed of the fan in fan assembly 5 and thereby how much air is pumped into or out of (or both if there are both intake and relief fans) the building per unit time. Pumping air into the building increases the pressure relative to the outdoor pressure, while pumping air out of the building reduces the indoor pressure. Being able to control the area of the envelope that is open (e.g. by opening or closing air vents) may have an additional effect. Controlling the air fan control 4 in accordance with the measured pressure difference can be used to obtain the first objective, that of obtaining the same air pressure indoor as outdoor. If the building consists of several floors and/or several rooms with limited passage of air between them, it may be necessary to control fans in different sections of the building differently. The various fans may, for example, be controlled based on measurements or estimates of variables that are applicable to the area of the building where the fan is located, in accordance with the considerations described above. This increases the complexity of the system, but does not change the problem as such.

As described above, in some embodiments of the invention the dew point for the warmest side of the envelope is calculated. It is only necessary to determine the dew point for the warmest side, because cooling air from the warmest side to the temperature of the coolest side may potentially cause condensation. The opposite is not true, since warming air from the coolest side to the temperature of the warmest side will not cause condensation, except maybe locally if the cool air reduces the temperature of surfaces that face humid air. For the purposes of ensuring that the air pressure difference inside the building envelope is positive in order to prevent infiltration of pollutants, it is leakage of warm humid air through the walls of the building 10 that may be problematic.

The dew point of the warm inside air can be measured by hygrometers or calculated. The calculation of dew points is fairly complex, but well known in the art. A well-known approximation is the Magnus formula

$$T_{dp} = \frac{c\gamma(T,\phi)}{b - \gamma(T,\phi)}$$

$$\gamma(T,\phi) = ln\left(\frac{\phi}{100}\right) + \frac{bT_c}{c + T_c}$$

(11)

where $T_c$ is the measured temperature in degrees Celsius, $\phi$ is the relative humidity, b = 18.678, and c = 257.14 °C. More complete formulas or other approximations may be substituted for equation (11).

If the dew point for the warmest side is lower than the temperature on the coolest side of the envelope, it is not necessary to consider condensation when controlling air pressure.

It should be noted that the avoidance of condensation, by ensuring that cooler air leaks towards the warmer side, does not have to be absolute. Whichever way the air leak happens, cooler air meets warmer air, and locally some air is heated while some air is cooled. This means that even if it is the cooler air that is leaking, there may be some condensation from the warmer air it meets. However, since the amount of leaking air will be much smaller than the amount of air that it meets, the leaking, cooler air will be absorbed by and heated up by the warmer air it meets, to a larger extent than that which would be the case if it was leaking warm air that met cooler air. Nevertheless, in some embodiments it may be considered advantageous to ensure that air leaks always go from inside the envelope and out in order to avoid cool surfaces around locations where air leaks of cold air into the building. It is therefore consistent with the invention to allow, or enforce, air leaks form the warmer to the cooler side of the envelope in certain installations.

In the present disclosure, the term ventilation system has been used to refer to systems that include intake and/or relief (exhaust) fans. This does not imply that a system covered by the term does not include additional functionality such as heating, cooling, humidification or dehumidification etc. As such, the term is intended to include air conditioning and HVAC systems. In addition to adjusting air pressure differences by controlling fans, the invention may be modified to control ventilation, heating, heat exchangers, humidifiers and dehumidifiers in order to adjust the indoor climate in a manner that reduces energy loss or the chance of condensation inside the building or walls.

**Claims**

1.   A method of preventing infiltration of pollutants into a building (10), wherein difference in air pressure on respective sides of a building envelope is controlled in order to prevent infiltration of pollutants,

to this end obtaining a measurement of a current difference in air pressure on respective sides of the building envelope;
**characterized in** further obtaining an estimate of the building's airtightness expressed as a correspondence between air flow (17, 18) through a building envelope and a difference in air pressure on respective sides of the building envelope (11);
obtaining a measurement of a current concentration of pollutants in the air outside the building envelope (11);
calculating an estimated current infiltration of pollutants per unit time through the building envelope (11) from the building's airtightness, the current difference in air pressure on respective sides of the building envelope (11), and the measurement of a current concentration of pollutants in the air outside the building envelope (11); and
if the calculated infiltration of pollutants per unit time through the building envelope (11) is above a predetermined threshold for infiltration of pollutants per unit time and if the air pressure on the inside of the building envelope is not at least a predetermined threshold for air pressure difference higher than the air pressure on the outside of the building envelope, controlling a ventilation system in the building to increase the inside air pressure until the air pressure inside the building envelope becomes higher than the air pressure outside the building envelope (11) with at least the predetermined threshold for air pressure difference, thus preventing or reducing infiltration of polluted air or other unwanted gases through the building envelope.

2.   The method according to claim 1, wherein the air pressure difference is measured close to the ground and the ventilation system is controlled to adjust the air pressure difference at the ground level in order to prevent infiltration of gas containing radon through the floor of the building.

3. The method according to claim 1 or 2, wherein the ventilation system is controlled to increase the air pressure inside the building envelope (11) by at least one of increasing the speed of an intake fan, decreasing the speed of a relief fan, increasing the opening of an intake vent, or decreasing the opening of a relief vent.

4. The method according to one of the previous claims, further comprising:

   obtaining a measurement of a concentration of radon in the air inside the building envelope (11); and
   controlling the ventilation system to increase the air pressure inside the building envelope (11) only if the measured concentration of radon is above a predetermined threshold for radon concentration.

5. The method according to one of the previous claims, further comprising:

   obtaining (501) sensor data relating to one or more of: air temperature on respective sides of the building envelope (11), absolute air pressure on at least one side of the building envelope (11), and air humidity on at least one side of the building envelope (11);
   calculating an estimated change in flow of air per unit time through the building envelope (11) that will result from increasing the inside air pressure such that the air pressure inside the building envelope is higher than the air pressure outside the building envelope (11) with at least the predetermined threshold for air pressure difference;
   calculating (504) an estimated energy loss that will result from increasing the air pressure difference based on the calculated change in flow of air per unit time through the building envelope (11) and the received sensor data relating to one or more of: air temperature on respective sides of the building envelope (11), absolute air pressure on at least one side of the building envelope (11), and air humidity on at least one side of the building envelope (11); and
   controlling (507) the ventilation system to increase the air pressure inside the building envelope (11) only if the energy loss that will result from increasing the air pressure difference is below a predetermined threshold for energy loss.

6. The method according to one of the previous claims, further comprising:

   obtaining a measurement of or calculating a dew point for the air inside the building envelope (11); and
   controlling the ventilation system to increase the air pressure inside the building envelope (11) only if (506) the temperature of the air on the outside of the building envelope (11) is higher than the dew point of the air on the inside of the building envelope (11).

7. A system for preventing infiltration of pollutants into a building (10) wherein difference in air pressure on respective sides of a building envelope is controlled in order to prevent infiltration of pollutants, comprising

   a computerized control system (20) with communication interfaces configured to enable the control system to receive sensor data or data derived from sensor data and transmit control signals to the building's ventilation system, a controller (201) with a memory holding instructions configured to enable the controller (201) to issue control signals to at least one of a fan (5) and a vent in the ventilation system;
   with a differential pressure sensor (1) configured to measure a difference in air pressure on respective sides of the envelope (11) and transmit resulting sensor data to said control system;
   **characterized by**
   an air quality sensor (A) or a communication interface configured to receive sensor data from an air quality sensor (A), the air quality sensor (A) being configured to measure a current concentration of pollutants in the air outside the building envelope (11); and
   in said memory, a model representing the building's airtightness expressed as an estimate of a correspondence between air flow through the building envelope (11) and the difference in air pressure on respective sides of the envelope;
   wherein the instructions will cause the controller (201) to

      - calculate an estimated current infiltration of pollutants per unit time through the building envelope (11) based on the building's airtightness, a current difference in air pressure on respective sides of the building envelope (11), and a measurement of a current concentration of pollutants in the air outside the building envelope (11);
      - determine whether the air pressure on the inside of the building envelope (11) is at least a predetermined threshold for air pressure difference higher than the air pressure on the outside the building envelope (11), and

- if the calculated infiltration of pollutants per unit time through the building envelope (11) is above a predetermined threshold for infiltration of pollutants per unit time and if it is determined that the air pressure on the inside of the building envelope (11) is not at least the predetermined threshold for air pressure difference higher than the air pressure on the outside of the building envelope (11), issue control signals to the at least one of a fan (5) and a vent in the building's ventilation system to control the fan (5) or the vent to cause an increase in the inside air pressure until the air pressure inside the building envelope (11) becomes higher than the air pressure outside the building envelope (11) by at least the predetermined threshold for air pressure difference, thus preventing or reducing infiltration of polluted air or other gases through the building envelope.

8. The system according to claim 7, wherein the differential pressure sensor (1) is configured to measure the air pressure difference close to the ground and the controller (201) is configured to control the at least one of a fan (5) and a vent in the ventilation system in order to prevent infiltration of gas containing radon through the floor of the building.

9. The system according to claim 7 or 8, wherein the controller (201) is configured to issue control signals to control at least one of a fan (5) and a vent in the ventilation system to increase the air pressure inside the building envelope by at least one of increasing the speed of an intake fan, decreasing the speed of a relief fan, increasing the opening of an intake vent, or decreasing the opening of a relief vent.

10. The system according to one of the claims 7 - 9, further comprising a radon sensor (R) or a communication interface configured to receive sensor data from a radon sensor (R), the radon sensor (R) being configured to measure a concentration of radon in the air inside the building envelope (11); and wherein
the memory further comprises instructions that will cause the controller (201) to:

- determine whether the concentration of radon is above a predetermined threshold for radon concentration; and
- issue control signals to the at least one of a fan (5) and a vent in the building's ventilation system to cause an increase in the inside air pressure only if it is determined that the concentration of radon is above the predetermined threshold for radon concentration.

11. The system according to one of the claims 7 - 10, further comprising:
sensors or communication links to sensors selected from the group consisting of:

thermometers (T), hygrometers (H), and barometers (B);
and wherein
the memory further comprises instructions that will cause the controller (201) to:

- calculate an estimated change in flow of air per unit time through the building envelope (11) that will result from increasing the inside air pressure such that the air pressure inside the building envelope is higher than the air pressure outside the building envelope (11) with at least the predetermined threshold for air pressure difference;
- calculate an estimated energy loss that will result from increasing the air pressure difference based on the calculated estimated change in flow of air per unit time through the building envelope (11) and received sensor data relating to one or more of: air temperature on respective sides of the building envelope (11), absolute air pressure on at least one side of the building envelope (11), and air humidity on at least one side of the building envelope (11); and
- issue control signals to the at least one of a fan and a vent in the building's ventilation system to cause an increase in the air pressure inside the building envelope (11) only if the calculated energy loss that will result from increasing the air pressure difference is below a predetermined threshold for energy loss.

12. The system according to one of the claims 7 - 11, further comprising:

one or more sensors (T, B, H) providing data related to temperature and humidity on respective sides of the building envelope (11); and wherein
the memory further comprises instructions that will cause the controller (201) to:

- obtain a measurement of or calculate a dew point for the air inside the building envelope (11);

- determining whether the temperature of the air on the outside of the building envelope (11) is higher than the dew point for the air inside the building envelope (11); and
- issue control signals to the at least one of a fan and a vent in the building's ventilation system to cause an increase in the air pressure inside the building envelope (11) only if it is determined that the temperature of the air on the outside of the building envelope (11) is higher than the dew point for the air inside the building envelope (11).

**Patentansprüche**

1. Verfahren zum Verhindern eines Eindringens von Verunreinigungen in ein Gebäude (10), wobei ein Unterschied des Luftdrucks auf jeweiligen Seiten einer Gebäudehülle gesteuert wird, um ein Eindringen von Verunreinigungen zu verhindern,

   zu diesem Zweck, Erhalten einer Messung eines aktuellen Unterschieds des Luftdrucks auf jeweiligen Seiten der Gebäudehülle;
   **gekennzeichnet durch** ferner Erhalten einer Schätzung der Luftdichtigkeit des Gebäudes, ausgedrückt als eine Übereinstimmung zwischen einem Luftstrom (17, 18) durch eine Gebäudehülle und eines Unterschieds des Luftdrucks auf jeweiligen Seiten der Gebäudehülle (11);
   Erhalten einer Messung einer aktuellen Konzentration von Verunreinigungen in der Luft außerhalb der Gebäudehülle (11);
   Berechnen eines geschätzten aktuellen Eindringens von Verunreinigungen pro Einheitszeit durch die Gebäudehülle (11) aus der Luftdichtigkeit des Gebäudes, des aktuellen Unterschieds des Luftdrucks auf jeweiligen Seiten der Gebäudehülle (11) und der Messung einer aktuellen Konzentration von Verunreinigungen in der Luft außerhalb der Gebäudehülle (11); und
   wenn das berechnete Eindringen von Verunreinigungen pro Einheitszeit durch die Gebäudehülle (11) über einem vorbestimmten Schwellenwert für das Eindringen von Verunreinigungen pro Einheitszeit liegt und wenn der Luftdruck auf der Innenseite der Gebäudehülle nicht mindestens um einen vorbestimmten Schwellenwert für einen Luftdruckunterschied höher ist als ein Luftdruck auf der Außenseite der Gebäudehülle, Steuern eines Ventilationssystems in dem Gebäude, um den Innenluftdruck zu vergrößern, bis der Luftdruck innerhalb der Gebäudehülle um mindestens den vorbestimmten Schwellenwert für den Luftdruckunterschied höher wird als der Luftdruck außerhalb der Gebäudehülle (11), sodass das Eindringen von verschmutzter Luft oder anderen unerwünschten Gasen durch die Gebäudehülle verhindert oder reduziert wird.

2. Verfahren nach Anspruch 1, wobei der Luftdruckunterschied nahe zum Boden gemessen wird und das Ventilationssystem dazu gesteuert wird, den Luftdruckunterschied auf Bodenniveau anzupassen, um das Eindringen von radonhaltigem Gas durch den Fußboden des Gebäudes zu verhindern.

3. Verfahren nach Anspruch 1 oder 2, wobei das Ventilationssystem dazu gesteuert ist, den Luftdruck innerhalb der Gebäudehülle (11) durch mindestens eines aus Vergrößern der Drehzahl eines Ansaugventilators, Verringern der Drehzahl eines Ausstoßventilators, Vergrößern der Öffnung eines Ansaugventilators oder Verringern der Öffnung eines Ausstoßventilators zu vergrößern.

4. Verfahren nach einem der vorherigen Ansprüche, ferner umfassend:

   Erhalten einer Messung einer Radonkonzentration in der Luft innerhalb der Gebäudehülle (11); und
   Steuern des Ventilationssystems, um den Luftdruck innerhalb der Gebäudehülle (11) nur zu vergrößern, wenn die gemessene Radonkonzentration über einem vorbestimmten Schwellenwert für eine Radonkonzentration liegt.

5. Verfahren nach einem der vorherigen Ansprüche, ferner umfassend:

   Erhalten (501) von Sensordaten in Bezug auf eines oder mehrere aus: Lufttemperatur auf jeweiligen Seiten der Gebäudehülle (11), absolutem Luftdruck auf mindestens einer Seite der Gebäudehülle (11) und Luftfeuchte auf mindestens einer Seite der Gebäudehülle (11);
   Berechnen einer geschätzten Änderung des Luftstroms pro, Einheitszeit durch die Gebäudehülle (11), die sich aus dem Vergrößern des Innenluftdrucks ergeben wird, sodass der Luftdruck innerhalb der Gebäudehülle um mindestens den vorbestimmten Schwellenwert für einen Luftdruckunterschied höher ist als der Luftdruck außerhalb der Gebäudehülle (11);

Berechnen (504) eines geschätzten Energieverlusts, der sich aus dem Vergrößern des Luftdruckunterschieds ergeben wird, basierend auf der berechneten Änderung des Luftstroms pro Einheitszeit durch die Gebäudehülle (11) und den empfangenen Sensordaten in Bezug auf eines oder mehrere aus: Lufttemperatur auf jeweiligen Seiten der Gebäudehülle (11), absolutem Luftdruck auf mindestens einer Seite der Gebäudehülle (11) und Luftfeuchte auf mindestens einer Seite der Gebäudehülle (11); und

Steuern (507) des Ventilationssystems dazu, den Luftdruck innerhalb der Gebäudehülle (11) nur zu vergrößern, wenn der Energieverlust, der sich aus dem Vergrößern des Luftdruckunterschieds ergeben wird, unter einem vorbestimmten Schwellenwert für Energieverlust liegt.

6. Verfahren nach einem der vorherigen Ansprüche, ferner umfassend:

Erhalten einer Messung oder einer Berechnung eines Taupunkt für die Luft innerhalb der Gebäudehülle (11); und

Steuern des Ventilationssystems dazu, den Luftdruck innerhalb der Gebäudehülle (11) nur zu vergrößern, wenn (506) die Temperatur der Luft auf der Außenseite der Gebäudehülle (11) höher ist als der Taupunkt der Luft auf der Innenseite der Gebäudehülle (11).

7. System zum Verhindern des Eindringens von Verunreinigungen in ein Gebäude (10), wobei ein Unterschied des Luftdrucks auf jeweiligen Seiten einer Gebäudehülle gesteuert wird, um das Eindringen von Verunreinigungen zu verhindern, umfassend ein computerbasiertes Steuerungssystem (20) mit Kommunikationsschnittstellen, die dazu konfiguriert sind, zu ermöglichen, dass das Steuerungssystem Sensordaten oder von Sensordaten abgeleitete Daten empfängt und Steuerungssignale an das Ventilationssystem des Gebäudes sendet, eine Steuerung (201) mit einem Speicher, der Anweisungen speichert, die dazu konfiguriert sind, zu ermöglichen, dass die Steuerung (201) Steuerungssignale an mindestens eines aus einem Gebläse (5) und einem Ventilator in dem Ventilationssystem ausgibt;

wobei ein Differentialdrucksensor (1) dazu konfiguriert ist, einen Unterschied des Luftdrucks auf jeweiligen Seiten der Hülle (11) zu messen und sich ergebende Sensordaten an das Steuerungssystem zu senden; **gekennzeichnet durch** einen Luftqualitätssensor (A) oder eine Kommunikationsschnittstelle, die dazu konfiguriert ist, Sensordaten von einem Luftqualitätssensor (A) zu empfangen, wobei der Luftqualitätssensor (A) dazu konfiguriert ist, eine aktuelle Konzentration von Verunreinigungen in der Luft außerhalb der Gebäudehülle (11) zu messen; und

in dem Speicher, ein Modell, das die Luftdichtigkeit des Gebäudes darstellt, ausgedrückt als eine Schätzung einer Übereinstimmung zwischen einem Luftstrom durch die Gebäudehülle (11) und dem Unterschied des Luftdrucks auf jeweiligen Seiten der Hülle; wobei die Anweisungen die Steuerung (201) veranlassen,

- ein geschätztes aktuelles Eindringen von Verunreinigungen pro Einheitszeit durch die Gebäudehülle (11) basierend auf der Luftdichtigkeit des Gebäudes, einem aktuellen Unterschied des Luftdrucks auf jeweiligen Seiten der Gebäudehülle (11) und einer Messung einer aktuellen Konzentration von Verunreinigungen in der Luft außerhalb der Gebäudehülle (11) zu berechnen;

- zu bestimmen, ob der Luftdruck auf der Innenseite der Gebäudehülle (11) mindestens um einen vorbestimmten Schwellenwert für einen Luftdruckunterschied höher als ein Luftdruck auf der Außenseite der Gebäudehülle (11) ist, und

- wenn das berechnete Eindringen von Verunreinigungen pro Einheitszeit durch die Gebäudehülle (11) über einem vorbestimmten Schwellenwert für das Eindringen von Verunreinigungen pro Einheitszeit ist und wenn bestimmt wird, dass der Luftdruck auf der Innenseite der Gebäudehülle (11) nicht mindestens um den vorbestimmten Schwellenwert für einen Luftdruckunterschied höher als der Luftdruck auf der Außenseite der Gebäudehülle (11) ist, Steuerungssignale an das mindestens eine aus einem Gebläse (5) und einem Ventilator in dem Ventilationssystems des Gebäudes auszugeben, um das Gebläse (5) oder den Ventilator dazu zu steuern, eine Vergrößerung des Innenluftdrucks zu veranlassen, bis der Luftdruck innerhalb der Gebäudehülle (11) um mindestens den vorbestimmten Schwellenwert für den Luftdruckunterschied höher wird als der Luftdruck außerhalb der Gebäudehülle (11), sodass das Eindringen von verschmutzter Luft oder anderen Gasen durch die Gebäudehülle verhindert oder reduziert wird.

8. System nach Anspruch 7, wobei der Differentialdrucksensor (1) dazu konfiguriert ist, den Luftdruckunterschied nahe zum Boden zu messen und die Steuerung (201) dazu konfiguriert ist, mindestens eines aus einem Gebläse (5) und einem Ventilator in dem Ventilationssystem zu steuern, um das Eindringen von radonhaltigem Gas durch den Fußboden des Gebäudes zu verhindern.

9. System nach Anspruch 7 oder 8, wobei die Steuerung (201) dazu konfiguriert ist, Steuerungssignale auszugeben, um mindestens eines aus einem Gebläse (5) und einem Ventilator des Ventilationssystems dazu zu steuern, den Luftdruck innerhalb der Gebäudehülle durch mindestens eines aus Vergrößern der Drehzahl eines Ansaugventilators, Verringern der Drehzahl eines Ausstoßventilators, Vergrößern der Öffnung eines Ansaugventilators oder Verringern der Öffnung eines Ausstoßventilators zu vergrößern.

10. System nach einem der Ansprüche 7 bis 9, ferner umfassend eine Radonsensor (R) oder eine Kommunikationsschnittstelle, die dazu konfiguriert ist, Sensordaten von einem Radonsensor (R) zu empfangen, wobei der Radonsensor (R) dazu konfiguriert ist, eine Radonkonzentration in der Luft innerhalb der Gebäudehülle (11) zu messen; und wobei
der Speicher ferner Anweisungen umfasst, die die Steuerung (201) veranlassen,

   - zu bestimmen, ob die Radonkonzentration über einem vorbestimmten Schwellenwert für eine Radonkonzentration liegt; und
   - Steuerungssignale an mindestens eines aus einem Gebläse (5) und einem Ventilator in dem Ventilationssystem des Gebäudes auszugeben, um eine Vergrößerung des Innenluftdrucks nur zu veranlassen, wenn bestimmt wird, dass die Radonkonzentration über dem vorbestimmten Schwellenwert für eine Radonkonzentration liegt.

11. System nach einem der Ansprüche 7 bis 10, ferner umfassend:

   Sensoren oder Kommunikationsverknüpfungen zu Sensoren, die ausgewählt sind aus der Gruppe bestehend aus Thermometern (T), Hygrometern (H) und Barometern (B);
   und wobei
   der Speicher ferner Anweisungen umfasst, die die Steuerung (201) veranlassen,

   - eine geschätzte Änderung des Luftstroms pro Einheitszeit durch die Gebäudehülle (11) zu berechnen, die sich aus dem Vergrößern des Innenluftdrucks ergeben wird, sodass der Luftdruck innerhalb der Gebäudehülle um mindestens den vorbestimmten Schwellenwert für einen Luftdruckunterschied höher ist als der Luftdruck außerhalb der Gebäudehülle (11);
   - einen geschätzten Energieverlust zu berechnen, der sich aus dem Vergrößern des Luftdruckunterschieds ergeben wird, basierend auf der berechneten geschätzten Änderung des Luftstroms pro Einheitszeit durch die Gebäudehülle (11) und auf empfangenen Sensordaten in Bezug auf eines oder mehrere aus: Lufttemperatur auf jeweiligen Seiten der Gebäudehülle (11), absolutem Luftdruck auf mindestens einer Seite der Gebäudehülle (11) und Luftfeuchte auf mindestens einer Seite der Gebäudehülle (11); und
   - Steuerungssignale an mindestens eines aus einem Gebläse und einem Ventilator in dem Ventilationssystem des Gebäudes auszugeben, um eine Vergrößerung des Luftdrucks innerhalb der Gebäudehülle (11) nur zu veranlassen, wenn der berechnete Energieverlust, der sich aus dem Vergrößern des Luftdruckunterschieds ergeben wird, unter einem vorbestimmten Schwellenwert für Energieverlust liegt.

12. System nach einem der Ansprüche 7 bis 11, ferner umfassend:

   einen oder mehrere Sensoren (T, B, H), die Daten in Bezug auf Temperatur und Feuchte auf jeweiligen Seiten der Gebäudehülle (11) bereitstellen; und wobei
   der Speicher ferner Anweisungen umfasst, die die Steuerung (201) veranlassen,

   - eine Messung eines Taupunkt für die Luft innerhalb der Gebäudehülle (11) zu erhalten oder diesen zu berechnen;
   - zu bestimmen, ob die Temperatur der Luft auf der Außenseite der Gebäudehülle (11) höher ist als der Taupunkt für die Luft innerhalb der Gebäudehülle (11); und
   - Steuerungssignale an das mindestens eine aus einem Gebläse und einem Ventilator in dem Ventilationssystem des Gebäudes auszugeben, um eine Vergrößerung des Luftdrucks innerhalb der Gebäudehülle (11) nur zu veranlassen, wenn bestimmt wird, dass die Temperatur der Luft auf der Außenseite der Gebäudehülle (11) höher ist als der Taupunkt für die Luft innerhalb der Gebäudehülle (11).

**Revendications**

1. Procédé de prévention de l'infiltration de polluants dans un bâtiment (10), dans lequel la différence de pression de l'air sur les côtés respectifs d'une enveloppe du bâtiment est commandée afin d'empêcher l'infiltration de polluants,

à cette fin par l'obtention d'une mesure d'une différence actuelle de pression de l'air sur les côtés respectifs de l'enveloppe du bâtiment ;

**caractérisé par** l'obtention en outre d'une estimation de l'étanchéité à l'air du bâtiment exprimée comme une correspondance entre le débit d'air (17, 18) à travers l'enveloppe du bâtiment et la différence de pression de l'air sur les côtés respectifs de l'enveloppe du bâtiment (11) ;

l'obtention d'une mesure d'une concentration actuelle de polluants dans l'air à l'extérieur de l'enveloppe du bâtiment (11) ;

le calcul d'une infiltration actuelle estimée de polluants par unité de temps à travers l'enveloppe du bâtiment (11) à partir de l'étanchéité à l'air du bâtiment, de la différence actuelle de pression de l'air sur les côtés respectifs de l'enveloppe du bâtiment (11), et de la mesure d'une concentration actuelle de polluants dans l'air à l'extérieur de l'enveloppe du bâtiment (11) ; et

si l'infiltration calculée de polluants par unité de temps à travers l'enveloppe du bâtiment (11) dépasse un seuil prédéterminé d'infiltration de polluants par unité de temps et si la pression de l'air à l'intérieur de l'enveloppe du bâtiment n'est pas supérieure d'au moins un seuil prédéterminé de différence de pression de l'air par rapport à la pression de l'air à l'extérieur de l'enveloppe du bâtiment, la commande d'un système de ventilation dans le bâtiment de manière à augmenter la pression de l'air à l'intérieur jusqu'à ce que la pression de l'air à l'intérieur de l'enveloppe du bâtiment devienne supérieure à la pression de l'air à l'extérieur de l'enveloppe du bâtiment (11) d'au moins le seuil prédéterminé de différence de pression de l'air, empêchant ainsi ou réduisant l'infiltration d'air pollué ou d'autres gaz indésirables à travers l'enveloppe du bâtiment.

2. Procédé selon la revendication 1, dans lequel la différence de pression de l'air est mesurée à proximité du sol et le système de ventilation est commandé pour ajuster la différence de pression de l'air au niveau du sol afin d'empêcher l'infiltration de gaz contenant du radon à travers le plancher du bâtiment.

3. Procédé selon la revendication 1 ou 2, dans lequel le système de ventilation est commandé pour augmenter la pression de l'air à l'intérieur de l'enveloppe du bâtiment (11) par au moins l'un parmi l'augmentation de la vitesse d'un ventilateur d'admission, la diminution de la vitesse d'un ventilateur de décharge, l'augmentation de l'ouverture de l'orifice d'admission ou la diminution de l'ouverture d'un orifice de décharge.

4. Procédé selon l'une des revendications précédentes, comprenant en outre :

l'obtention d'une mesure d'une concentration en radon dans l'air à l'intérieur de l'enveloppe du bâtiment (11) ; et
la commande du système de ventilation pour augmenter la pression de l'air à l'intérieur de l'enveloppe du bâtiment (11) uniquement si la concentration mesurée de radon dépasse un seuil prédéterminé de concentration en radon.

5. Procédé selon l'une des revendications précédentes, comprenant en outre :

l'obtention (501) de données de capteurs relatives à un ou plusieurs parmi : la température de l'air sur les côtés respectifs de l'enveloppe du bâtiment (11), la pression absolue de l'air sur au moins un côté de l'enveloppe du bâtiment (11), et l'humidité de l'air sur au moins un côté de l'enveloppe du bâtiment (11) ;
le calcul d'une variation estimée dans le débit d'air par unité de temps à travers l'enveloppe du bâtiment (11) qui résultera d'une augmentation de la pression de l'air à l'intérieur de sorte que la pression de l'air à l'intérieur de l'enveloppe du bâtiment soit supérieure à la pression de l'air à l'extérieur de l'enveloppe du bâtiment (11) d'au moins le seuil prédéterminé de différence de pression de l'air ;
le calcul (504) d'une perte d'énergie estimée qui résultera de l'augmentation de la différence de pression de l'air, sur la base de la variation calculée dans le débit d'air par unité de temps à travers l'enveloppe du bâtiment (11) et sur les données de capteurs reçues relatives à un ou plusieurs parmi une température de l'air sur les côtés respectifs de l'enveloppe du bâtiment (11), une pression absolue de l'air sur au moins un côté l'enveloppe du bâtiment (11), et une humidité de l'air sur au moins un côté de l'enveloppe du bâtiment (11) ; et
la commande (507) du système de ventilation pour augmenter la pression de l'air à l'intérieur de l'enveloppe du bâtiment (11) uniquement si la perte d'énergie qui résultera de l'augmentation de la pression de l'air est inférieure à un seuil prédéterminé de perte d'énergie.

6. Procédé selon l'une des revendications précédentes, comprenant en outre :

l'obtention d'une mesure ou le calcul d'un point de rosée pour l'air à l'intérieur de l'enveloppe du bâtiment (11) ; et
la commande du système de ventilation pour augmenter la pression de l'air à l'intérieur de l'enveloppe du bâtiment (11) uniquement si (506) la température de l'air à l'extérieur de l'enveloppe du bâtiment (11) est supérieure au point de rosée de l'air à l'intérieur de l'enveloppe du bâtiment (11).

**7.** Système de prévention de l'infiltration de polluants dans un bâtiment (10), dans lequel la différence de pression de l'air sur les côtés respectifs de l'enveloppe du bâtiment est commandée afin d'empêcher l'infiltration de polluants, comprenant un système de commande informatisé (20) avec des interfaces de communication configurées pour permettre au système de commande de recevoir des données de capteurs ou des données dérivées de données de capteur et transmettre des signaux de commande au système de ventilation du bâtiment, un contrôleur (201) doté d'une mémoire contenant des instructions configurées pour permettre au contrôleur (201) d'émettre des signaux de commande à au moins un ventilateur (5) et à un orifice d'aération dans le système de ventilation ;

avec un capteur de pression différentielle (1) configuré pour mesurer une différence de pression de l'air sur les côtés respectifs de l'enveloppe (11) et transmettre les données de capteur qui en résultent audit système de commande ;
**caractérisé par** un capteur de qualité de l'air (A) ou une interface de communication configurée pour recevoir des données de capteur provenant d'un capteur de qualité de l'air (A), le capteur de qualité de l'air (A) étant configuré pour mesurer une concentration actuelle de polluants dans l'air à l'extérieur de l'enveloppe du bâtiment (11) ; et
dans ladite mémoire, un modèle représentant l'étanchéité à l'air du bâtiment exprimée comme une estimation d'une correspondance entre un débit d'air à travers l'enveloppe du bâtiment (11) et la différence de pression de l'air sur les côtés respectifs de l'enveloppe ;
dans lequel les instructions amèneront le contrôleur (201) à :

- calculer une estimation de l'infiltration actuelle de polluants par unité de temps à travers l'enveloppe du bâtiment (11) sur la base de l'étanchéité à l'air du bâtiment, de la différence actuelle de pression de l'air sur les côtés respectifs de l'enveloppe du bâtiment (11), et d'une mesure de la concentration actuelle de polluants dans l'air à l'extérieur de l'enveloppe du bâtiment (11) ;
- déterminer si la pression de l'air à l'intérieur de l'enveloppe du bâtiment (11) est supérieure d'au moins un seuil prédéterminé de différence de pression de l'air par rapport à la pression de l'air à l'extérieur de l'enveloppe du bâtiment (11), et
- si l'infiltration calculée de polluants par unité de temps à travers l'enveloppe du bâtiment (11) dépasse un seuil prédéterminé d'infiltration de polluants par unité de temps, et s'il est déterminé que la pression de l'air à l'intérieur de l'enveloppe du bâtiment (11) n'est pas supérieure d'au moins le seuil prédéterminé de différence de pression de l'air par rapport à la pression de l'air à l'extérieur de l'enveloppe du bâtiment (11), émettre des signaux de commande audit au moins un parmi un ventilateur (5) et un orifice d'aération dans le système de ventilation du bâtiment afin de commander le ventilateur (5) ou l'orifice d'aération de manière à amener une augmentation de la pression de l'air à l'intérieur jusqu'à ce que la pression de l'air à l'intérieur de l'enveloppe du bâtiment (11) devienne supérieure à la pression de l'air à l'extérieur de l'enveloppe du bâtiment (11) d'au moins le seuil prédéterminé de différence de pression de l'air, empêchant ou réduisant ainsi l'infiltration d'air pollué ou d'autres gaz indésirables à travers l'enveloppe du bâtiment.

**8.** Système selon la revendication 7, dans lequel le capteur de pression différentielle (1) est configuré pour mesurer la différence de pression de l'air à proximité du sol, et le contrôleur (201) est configuré pour contrôler ledit au moins un ventilateur (5) ou un orifice d'aération dans le système de ventilation afin d'empêcher l'infiltration de gaz contenant du radon à travers le plancher du bâtiment.

**9.** Système selon la revendication 7 ou 8, dans lequel le contrôleur (201) est configuré pour émettre des signaux de commande pour commander au moins un ventilateur (5) ou un orifice d'aération du système de ventilation afin d'augmenter la pression de l'air à l'intérieur de l'enveloppe du bâtiment par au moins l'un parmi l'augmentation de la vitesse d'un ventilateur d'admission, la diminution de la vitesse d'un ventilateur de décharge, l'augmentation de l'ouverture d'un orifice d'admission, ou la diminution de l'ouverture d'un orifice de décharge.

**10.** Système selon l'une quelconque des revendications 7 à 9, comprenant en outre un capteur de radon (R) ou une interface de communication configurée pour recevoir des données de capteur provenant d'un capteur de radon (R), le capteur de radon (R) étant configuré pour mesurer une concentration en radon dans l'air à l'intérieur de l'enveloppe du bâtiment (11) ; et dans lequel
la mémoire comprend en outre des instructions amenant le contrôleur (201) à :

- déterminer si la concentration en radon dépasse un seuil prédéterminé de concentration en radon ; et
- émettre des signaux de commande vers ledit au moins un ventilateur (5) ou un orifice d'aération dans le système de ventilation du bâtiment pour amener une augmentation de la pression de l'air à intérieur uniquement s'il est déterminé que la concentration en radon dépasse le seuil prédéterminé de concentration en radon.

11. Système selon l'une quelconque des revendications 7 à 10, comprenant en outre :

des capteurs ou des liaisons de communication avec des capteurs sélectionnés parmi le groupe constitué de : thermomètres (T), hygromètres (H) et baromètres (B) ;
et dans lequel
la mémoire comprend en outre des instructions qui amèneront le contrôleur (201) à :

- calculer une variation estimée dans le débit d'air par unité de temps à travers l'enveloppe du bâtiment (11) qui résultera d'une augmentation de la pression de l'air à l'intérieur, de telle sorte que la pression de l'air à l'intérieur de l'enveloppe du bâtiment est soit supérieure à la pression de l'air à l'extérieur de l'enveloppe du bâtiment (11) d'au moins le seuil prédéterminé de différence de pression de l'air ;
- calculer une perte d'énergie estimée qui résultera de l'augmentation de la différence de pression de l'air sur la base de la variation estimée calculée dans le débit d'air par unité de temps à travers l'enveloppe du bâtiment (11) et des données de capteur reçues relatives à un ou plusieurs parmi : la température de l'air sur les côtés respectifs de l'enveloppe du bâtiment (11), la pression absolue de l'air sur au moins un côté de l'enveloppe du bâtiment (11), et l'humidité de l'air sur au moins un côté de l'enveloppe du bâtiment (11) ; et
- émettre des signaux de commande vers ledit au moins un ventilateur et un orifice d'aération dans le système de ventilation du bâtiment afin d'amener une augmentation de la pression de l'air à l'intérieur de l'enveloppe du bâtiment (11) uniquement si la perte d'énergie calculée qui résultera de l'augmentation de la différence de pression de l'air est inférieure à un seuil prédéterminé de perte d'énergie.

12. Système selon l'une quelconque des revendications 7 à 11, comprenant en outre :

un ou plusieurs capteurs (T, B, H) fournissant des données relatives à la température et à l'humidité sur les côtés respectifs de l'enveloppe du bâtiment (11) ; et dans lequel
la mémoire comprend en outre des instructions qui amèneront le contrôleur (201) à :

- obtenir une mesure ou calculer un point de rosée de l'air à l'intérieur de l'enveloppe du bâtiment (11) ;
- déterminer si la température de l'air à l'extérieur de l'enveloppe du bâtiment (11) est supérieure au point de rosée de l'air à l'intérieur de l'enveloppe du bâtiment (11) ; et
- émettre des signaux de commande vers ledit au moins un ventilateur et un orifice d'aération dans le système de ventilation du bâtiment afin d'amener une augmentation de la pression de l'air à l'intérieur de l'enveloppe du bâtiment (11) uniquement s'il est déterminé que la température de l'air à l'extérieur de l'enveloppe du bâtiment (11) est supérieure au point de rosée de l'air à l'intérieur de l'enveloppe du bâtiment (11).

Figure 1b

Figure 1a

Figure 2

Figure 3

Figure 4b

Figure 4a

Figure 5

Figure 6

**EP 4 222 422 B1**

REFERENCES CITED IN THE DESCRIPTION

**Patent documents cited in the description**

- US 4915020 A
- WO 2020167133 A1
- KR 20190105391